# EUROPEAN PATENT SPECIFICATION

(11) **EP 1 646 220 B1**
(45) Date of publication and mention of the grant of the patent: **07.04.2021**
(21) Application number: 05109167.6
(22) Date of filing: 04.10.2005
(51) Int. Cl.: H04N 1/00

(54) **System and method for creating a photo movie**
System und Methode zur Erstellung eines Films aus digitalen Fotos
Système et procédé pour créer un film à partir de photographies numériques

(30) Priority: 05.10.2004 US 958706
(43) Date of publication of application: 12.04.2006
(73) Proprietor: MAGIX Software GmbH, 10589 Berlin (DE)
(72) Inventor: Herberger, Tilman, 01219 Dresden (DE); Tost, Titus, 01219 Dresden (DE)

(56) References cited:
- EP-A1- 1 168 838
- WO-A-03/063132
- US-A- 5 404 316
- US-A- 5 491 778
- US-A- 5 692 117
- US-A1- 2002 080 159
- US-A1- 2003 206 729
- US-A1- 2004 027 369
- US-A1- 2004 091 232

## Description

### BACKGROUND OF THE INVENTION

In the past few years there has been a conti nui ng trend toward the use of a personal computer as a platform for entertainment and recreation, with personal computers being increasingly used in multimedia contexts. One factor that has hastened this movement is the ongoing digitalisation of the entertainment area. For example digital video cameras can now be connected to a personal computer and recordings can easily be transferred thereto for further editing, thereby giving the user the opportunity to interact and work with his or her own recordings in a way that would have been impossible even a few short years ago. Digital video still cameras have seen a similar increase in features and connectivity. These sorts of devices have undergone a massive technological boost in the last couple of years, with the technical equipment and features of these devices becoming more sophisticated with each technological step forward.

Of course, given the digital nature of these devices connectivity to a personal computer was a foregone conclusion and such interconnectivity has enabled a user to transfer multimedia data to a personal computer for safekeeping and editing. However, the development of software for use by the (often novice) end user has tended to lag behind the technology curve.

By way of explanation, software for editing digital video materials has long been available in the consumer market. With this sort of software an ambitious user can create (semi) professional polished video works in his or her own home. Of course, home multimedia editing programs have improved along with the hardware technology and have experienced an explosion of new capabilities and features.

With the increasing penetration of digital photo devices into the consumer market and the growing demand for software that allows users to create complex and sophisticated movie effects, software companies have continually expanded their feature sets at each software revision. However, for financial or other reasons, a new feature is often grafted onto an existing software product as an additional menu item or an obscure button within an already overly complex program design, thereby making the task at hand even harder for the user who may very well be a novice or casual user. Of course, in many cases the better choice (at least from the consumer's standpoint) would be to release a separate stand-alone program that was focused on the requisite functionality and which would be easier to use. There are obvious financial disincentives for doing this, however.

Of course, when feature proliferation is rampant the end user is often at a loss as to how to perform even simple operations, thereby making it likely that he or she will become frustrated with that particular program and, more generally, with multimedia editing.

This problem is compounded by the fact that ⁻ whether due to poor initial organization or later feature expansion ⁻ the functionality of most multimedia editing programs is spread over - several different sections of the graphical user interface so that the user may have to navigate through a variety of different menus, buttons and tabs to accomplish conceptually simple tasks. Finding that one computer menu or screen display that contains the sought-after parameter can be a frustrating task for the user which may be made all the more difficult by a mismatch between the user's screen resolution and the expected resolution.

These problems are especially apparent where a user seeks to create a video work from a collection of still photos. By way of explanation, there are millions of video still cameras in the hands of the public. The owners of such cameras predictably want to share those images with relatives and friends. A natural way to do that is to assemble the digital slides into a video work that can be played, for example, on any conventional DVD player. Further, most users would like some control over the video transitions that are utilized between successive digital images, would enjoy creating an audio track (e.g., a music sound track) to accompany the playing of the slide show, etc. However, general purpose movie creation and editing software does not allow a user to easily accomplish this simple task and such software, although powerful, typically has a bewildering arrays of menu items that tends to make completion of this task unnecessarily difficult.

US2004/0027369 describes an editing system for automatically, or semiautomatically, editing input data to generate output production. The input material is annotated by, or analyzed to derive, a set of media properties which describe the input material. The style of editing is controlled using style data which is optionally derived from a user. The input material may include any or more of motion video, still images, music, speech, sound effects, animated graphics and text. The style data and the properties are used to generate a set of operations which, when carried out on the input data, generate an edited output production. However, the disclosed system is essentially a fully automatic output material creation system for which only a rudimentary graphical user interface is described, wherein the specific options illustrated in the graphical user interface lead the user to a plurality of sub-menus to initiate the necessary selection. The disclosed system is therefore not directed to supply the user with a single-screen graphical user interface which eases and quickens the creation process of digital video works out of a plurality of available digital still images.

US5404316 describes a digital video processing system including an improved user interface for performing digital video image processing operations in real time. The user interface is separated into associated windows, known as the Player, Storyboard, Time and Script Views which together provide the composition and editing environment, wherein each of these windows provides a plurality of associated functionalities to the user when editing digital video. However each of these windows is provided on its own requiring the user to individually select them for use in editing video material. The disclosed system is therefore not directed to supply the user with a single-screen graphical user interface that has been specifically designed to efficiently enable a user to create video works out of a plurality of digital still images.

EP1168838 describes a process that allows for automatic editing of multimedia content, wherein the content is selected and edited to compose a multimedia work according to a predetermi ned scenario. These scenarios are digital editi ng schemes which feature distinct instructions regarding the music of the scenario, the individual number of scenes in such a scenario and probable effects or transitions used in such a scenario. When performing a random selection from individual clips in a material tray the specific instructions connected to such a scenario are implemented and therewith a specific individual multimedia work is created. However this process does not describe an approach to simplify the process of creating multimedia compositions out of multimedia content in manual editing by providing an solution combining the sections of providing a single-screen GUI, allowing user interaction with that GUI in terms of general definition of content to efficiently enable a user to create video works out of a plurality of digital still images without the need to pass through a long learning process.

Thus, what is needed is a system and method that enables a user to create a digital video work out of a plurality of available digital still images with the help of a graphical user interface, wherein the graphical user interface is designed to contain the essential functions needed to create a digital video work in at least one graphical display screen. This invention features a specifically designed graphical user interface, wherein the essential functions are selectable by the user of the instant invention with only one user interaction, preferably a mouse click.

Heretofore, as is well known in the media editing industry, there has been a need for an invention to address and solve the above-described problems. Accordingly it should now be recognized, as was recognized by the present inventors, that there exists, and has existed for some time, a very real need for a system and method that would address and solve the above-described problems.

The present invention is defined by the subject-matter of the appended claims. Further features of the present invention will become apparent from the following description of exemplary embodiments with reference to the attached drawings.

### BRIEF DESCRIPTION OF THE DRAWINGS

Other objects and advantages of the invention will become apparent upon reading the following detailed description and upon reference to the drawings in which:
Figure 1 illustrates a preferred environment for the instant invention.
Figure 2A depicts a preferred embodiment of the graphical user interface of the instant invention.
Figure 2B depicts an expanded view of a portion of the preferred graphical interface of Figure 2A that contains functions for use in selecting and applying movement effects.
Figure 3A illustrates a preferred graphical user interface during the editing process.
Figure 3B depicts an expanded view of a portion of the preferred graphical user interface of the instant invention during the editing process.
Figure 4 depicts an expanded view of the preferred graphical user interface of the instant invention during the editing process.
Figure 5 illustrates an expanded view of the preferred graphic user interface as used in connection with the image rotation effect.
Figure 6 contains a flowchart that illustrates the preferred steps that might be executed when a user applies a movement-type effect.

### DESCRIPTION OF THE PREFERRED EMBODIMENTS

Referring now to the drawings, wherein like reference numerals indicate the same parts throughout the several views, there is provided a preferred system and method for the creation of a video work out of a collection of digital still images, wherein the functionality of the computer program that implements the instant method and its graphic user interface has been designed to make the process as quick and efficient as possible.

Generally speaking the user will be provided with a process that is targeted to accelerate the creation process of a digital video work, thereby enabling the user to access all features and functions associated with the creation process within one displayed graphical user interface.

For purposes of the instant embodiment it should be understood that the invention preferably seeks to eliminate many of the problems and annoyances that might be experienced by a user who is attempting to create a video work out of a plurality of available digital still images. This goal is accomplished herein by providing the user with a program that implements the essential functions that are necessary to creating such a video work in an easy to user graphical user interface.

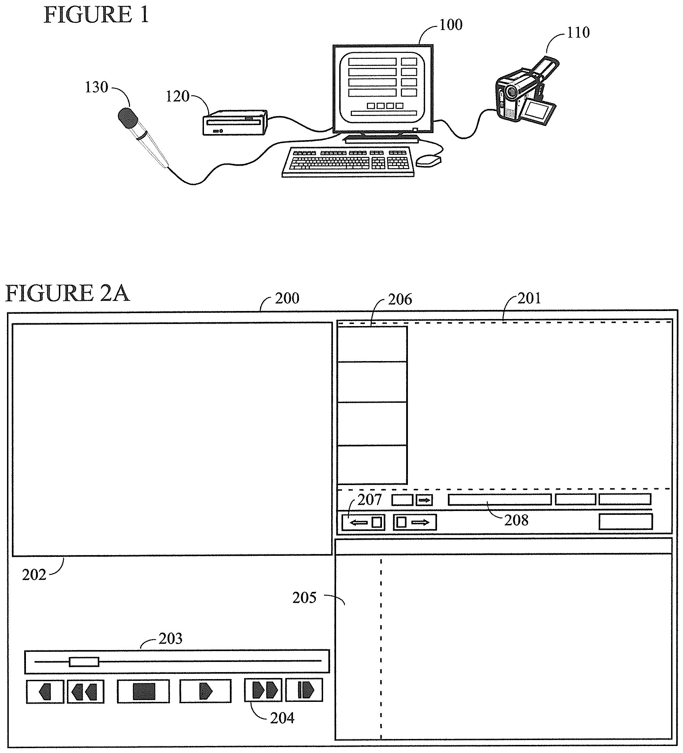

Turning now to a discussion of the general environment of the invention, as is generally indicated in Figure 1 at least a portion of the instant invention will be implemented in form of software running on a user's computer 100 such computer comprising at least a CPU and a display device. Such a computer will have access to amount of program memory and hard disk storage (whether internal or accessible via a network) as is conventionally utilized by such units.

Additionally it is possible that an external camera 110 of some sort could be utilized with - and will be preferably connectible to - the computer so that video and/or graphic information can be transferred to and from the computer (Figure 1). Preferably the camera 110 will be a digital video or photo camera, although that is not a requirement. Further given the modern trend toward incorporation of cameras into other electronic components (e.g. in handheld computers, telephones, laptops, etc.) those of ordinary skill in the art will recognize that the camera might be integrated into the computer or some other electronic device and, thus, might not be a traditional single-purposes video or still camera. Although the camera will preferably be digital in nature, any sort of camera might be used, provided that the proper interfacing between it and the computer is utilized. Additionally a microphone 130 might be utilized so that the user can add voice-over narration to the multimedia work and a CD or DVD burner 120 could be useful for storing in-progress or completed works.

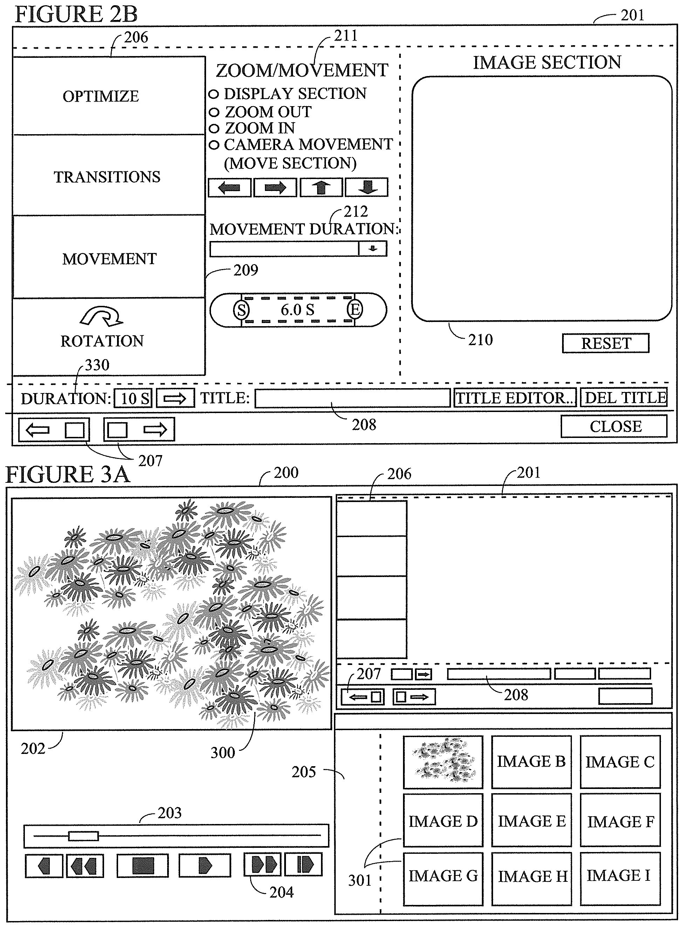

In accordance with Figure 2, in a preferred embodiment a user of the instant multimedia system software will be presented with a computer screen display 200 within which will be drawn a graphical user interface 201 suitable for use with the instant invention. Among the functionality that such an interface 201 might offer is a preview screen 202 which allows a user to examine the consequences of applying user-selected effects to a video image, preferably in real time. Additionally there will preferably be a region of the screen 205 that is used for data input, e.g., a text listing of digital image file names might be presented here, a display of image thumbnails might be drawn, etc. The user would typically choose from among the input items in this region 205 of the screen as he or she builds the video work.

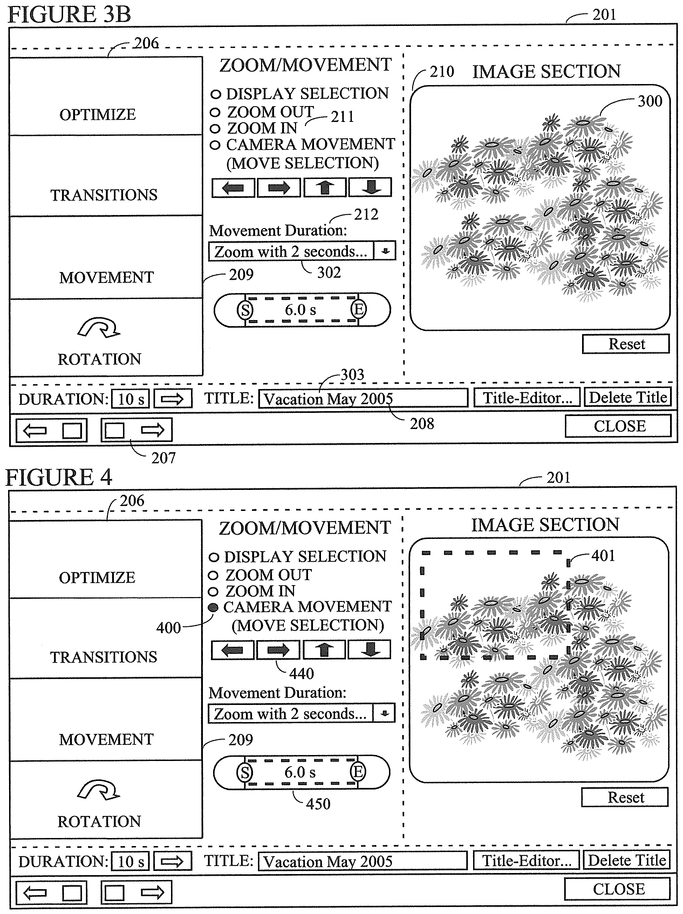

The display section 201 of the graphic user interface ("GUI") preferably contains a great deal of the functionality of the instant method. In this portion of the screen display 201 (which is shown in greater detail in Figures 2B and 3B), many of the functions and features that would be useful in the creation of a video work are arranged for the benefit of the user. For example, Figure 2B indicates how section 201 might appear if the user has elected to apply a "movement" effect to one of the input images by, for example, selecting one of the options within on-screen menu 206. A small section 210 of the GUI will preferably be devoted to display of the currently selected still image. In the preferred arrangement, some degree of interactivity will be provided so that the user can, for example, use the mouse / pointer to select regions of the image displayed within the image section 210. This sort of selection would be useful where, for example, a user was defining regions of a graphic image to which an effect is to be applied.

Additionally and preferably section 206 of the GUI provides selection buttons 206 that enable the user to quickly switch between functions when creating a digital video work. Preferably, there will be a corresponding change in the menu choices corresponding to the function selection. As is indicated in Figure 3B, selection of the movement option 209 causes the GUI section 201 to preferably be modified to reflect that choice. For example, various checkboxes 211 related to "Zoom/Movement" are preferably presented in response to selection of option 209. Additionally, a "Movement Duration" parameter 212 and associated drop-down menu 302 (e.g., "zoom for 2 seconds" has been selected) are added to the interface. It is anticipated that in some cases the user might want to utilize a zoom / movement effect that pans the camera across the zoomed image and parameters related to that option have been provided in the "Zoom" menu section 211 including the movement direction, duration, etc.

More generally, a slide duration parameter 330 is preferably made available to control the length of time that the currently selected slide / digital photo will be displayed in the video work. A title that describes the currently selected image can preferably be added via parameter field 208, such image preferably being printed atop the image during part or all of the time that it is visible in the video. Finally, navigation buttons / direction arrows 207 are preferably provided to allow a user to move to the next (or previous) digital image in the series.

On-screen transport controls 204 (Figure 2A) are preferably provided for control of the developing video work and will be styled to resemble their counterparts on a conventional VCR. These controls provide a mechanism for the user to rewind, play, stop/record, fast forward etc., the video work during the editing process. Those of ordinary skill in the art will recognize that such transport controls 204 are commonplace and well known in media editing programs. It is also typical in such programs to devote some portion of the screen to a timeline display 203 wherein a pointer indicates the general location within the entire video work of the currently selected digital image.

Turning to Figure 3A, this figure illustrates how the GUI of Figure 2 might appear during the editing process after a digital still image 300 has been selected. In the file management / ordering section 205 are a collection of images 301 that are available for selection. It is preferred that these image thumbnails 301 be presented in the order that - they will appear in the video work. Of course, it is anticipated that the user will be given an opportunity to reorder them via drag and drop or some other mechanism. In this example, the instant invention has displayed the first available digital still image 300 and given the user an opportunity to adjust the movement effects (which is made clearer in Figure 3B). Note that in this figure the movement duration has been set (parameter 302) and a title has been entered 303.

Figure 4 illustrates the screen of Figure 2 in another preferred arrangement. In this example, the user has selected subset of the digital image 401 a specific image section that is to be used when applying the selected movement effect. This region of the image is indicated visually by a dotted selection rectangle 401 that the user previously selected via the mouse or that has been provided by default. The area enclosed by the rectangle 401 is the section to which the selected effect will be subsequently applied when the video work is created. Additionally note that the user has selected a movement effect, with the direction of camera movement 400 being from left to right. In the preferred arrangement, the selected effect will be immediately applied and displayed in the preview screen 202 for evaluation by the user.

Considering Figure 4 in greater detail, in the preferred arrangement a user will be able to specify a movement effect with a single click of the mouse once the movement option 209 has been selected. As is indicated in this figure, when a user selects the movement 209 option he or she will preferably be presented with menu items 211 and a selection rectangle 401 will be drawn on top of the slide that is currently being reviewed / edited. Then, depending on which of the movement options 211 are selected, the selection rectangle 401 will operate as follows. First, in the instance that the user selects "Display Selection", the portion of the slide within the selection rectangle 401 will occupy the entire screen in the resulting movie (and its duration will be six seconds - parameter field 450). If the user selects the "Zoom Out" option, in the resulting movie the contents of the selection box 401 will initially fill the entire screen and then the (virtual) camera will pan away from the image 300 (i.e., increasingly more of the image will be viewable) for the selected period of time or until the entire image 300 is displayed. Similarly, if the "Zoom In" option is chosen, the contents of the selection box will serve as a starting point in the final movie and its contents will be gradually magnified until a maximum zoom level is reached or the designed time 450 expires.

Finally, in the event that the user selects the "Camera Movement" option, he or she can quickly define a specific direction of the movement of a virtual camera by selecting one of the four direction arrows that are located directly below that option. If a user selects, for example, the right arrow 440, the instant program will create a movement effect that makes it appear as though the camera is panning horizontally to the right during the time specified by the user. During the rendering / playback of the resulting movie the panning will continue during the time indicated, with the speed of the pan being such that the window reaches the edge of the image in exactly the time allotted. In some preferred embodiments the pan will move linearly and in others it will move non-linearly (i.e., the movement schedule will potentially be selectable by the user). Similarly, if the up-arrow, down-arrow, or left-arrow is selected the resulting movie will contain that effect. Preferably, and has been described previously, the speed of the horizontal / vertical pan will be such that the image reaches the edge of the image in exactly the time allocated. Additionally, it is preferred that the direction arrows be mutually exclusive (i.e., only one can be selected for a given slide), thereby making it easy for inexperienced users to produce a predictable panning-type effect with a minimum effort. Note that, once the movement option 209 is selected, only a single mouse click is required to specify a horizontally (or vertically) moving effect that utilizes the default time duration 212 and selection rectangle 401.

Note that in some preferred embodiments the user will be allowed to resize and/or reposition the selection rectangle 401 before / after selecting a particular movement effect. In other preferred embodiments, the user will be provided with a default selection rectangle 401 (which might be specified by the software designer or which may be a copy of a previously used customized selection region created by the user). In other preferred arrangements, the aspect ration of the selection rectangle 401 will be required to match the anticipated output movie format (e.g., 4:3, 16:9, etc.).

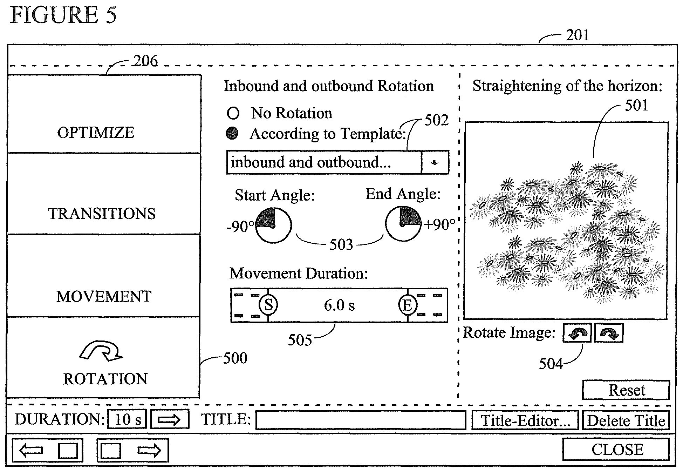

Figure 5 displays a preferred graphical user interface variant of the instant invention that would appear after the user selected the "rotation" tab 500. Preferably, and as is illustrated in this figure, the user will be presented with various parameter choices associated with the rotation effects including, without limitation, various rotation templates 502, starting and ending rotation angles 503, rotation directions 504, etc. The movement duration parameter 505 allows a user to have the image rotate for all (or only part) of the time that it is visible. As has been discussed previously, preferably a preview screen 501 will be provided so that the user can see the selected effect in real-time, albeit potentially at a lower resolution than the resolution of the output video work.

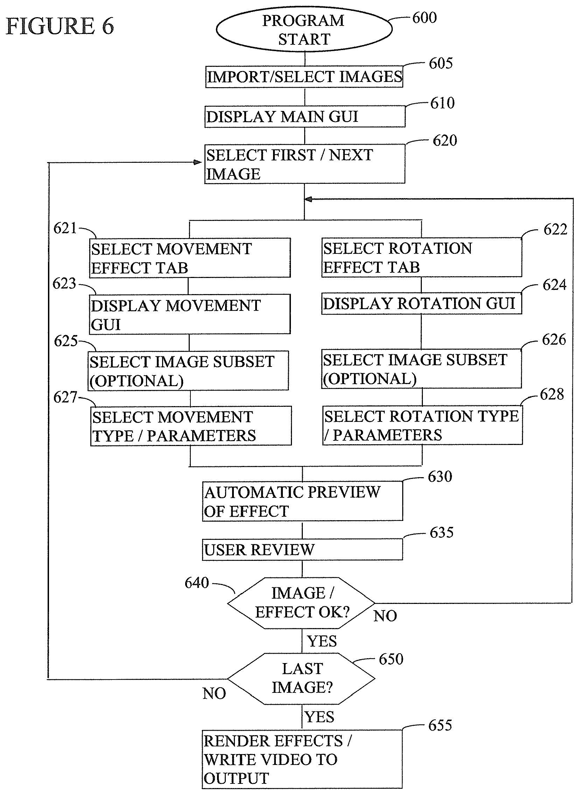

Turning next to Figure 6, in this figure is contained an overview of a preferred operating logic of the instant invention as applied to the selection of moving video effects. As a first preferred step 600, a program that implements the methods taught herein will be started and initialized according to methods well known to those of ordinary skill in the art. Next the user will preferably select some number of digital still images for import (step 605) after which the main editing GUI will be displayed (step 610) on the user's display device. Note that in the preferred arrangement during the input phase the user will indicate a directory containing images (and potentially subdirectories) that are to be read into the instant program. The program will preferably read the file names (and, preferably, thumbnails) of each of the designated images into memory. At that time an initial ordering of the images will take place, with the default ordering being based on file name (e.g., alphabetical or reverse alphabetical), creation date (e.g., earlier images are placed ahead of later ones), file size, modification date, etc. In brief, preferably the user will determine which ordering the program is to use in its initial arrangement. Further, the user will be given the opportunity (as was described previously) to manually reorder the digital images to suit his or her taste.

Next, the first (or next) image will be selected for editing (step 620) according to the ordering established previously. Preferably this selection will be made automatically.

As a next preferred step, the user will be allowed to select from any of the on-screen menu items 206. However, for purposes of illustration the logic associated with the "Movement" and "Rotation" tabs only will be discussed below.

If the user selects the movement tab (step 621), as a next preferred step the instant program 600 will draw the "Movement" GUI (step 623) and give user the option of selecting a subset of the current image for purposes of applying a digital effect (step 625). If the user does not so limit the area of the effect, preferably it will be applied to the entire image.

As a next preferred step, and for purposes of illustration only, the user will select the movement effect 627 type and associated parameters that is to be applied onto the current image. As has been discussed previously, when this option is selected preferably the GUI will be modified accordingly (step 623). The sorts of parameters that might be specified in connection with this effect have also been previously discussed.

If, on the other hand, the user selects the 'Rotation₋ tab (step 622) a similar sequence of events will take place. Preferably, the next step will involve display of a specialized rotation GUI (step 624), which will preferably provide the user with an opportunity to select a subset of the image for application of the rotation effect (step 626). The user will also be given an opportunity to modify the default rotation parameters (if such have been provided) in step 628.

Preferably, each selection of a different effect (or effect parameter) will result in an automatic preview 630 of the effect in conjunction to the defined image area. This might either be a one-time application of the effect or a loop, wherein the effect is repeated several times to help the user evaluate it (step 635). If the user is satisfied with the view of the image after application of the selected effect / parameters, the instant invention next automatically selects the next slide in sequence (steps 650 and 620). This process is preferably repeated until all of the input slides have been processed. After the last image has been edited (the 'YES₋ branch of step 650), the instant invention preferably will write the collection of slides and associated effects / transitions / etc. to output. Note that in most cases the effects specified by the user will not actually be calculated until this step and that the previews that are presented during the editing process may be lower-resolution approximations to the effects that are calculated at this step.

If the user is not satisfied with the appearance of the image / effect(s) combination, the instant program will preferably allow him or her to modify the existing effect, or add another (the 'NO₋ branch of decision step 640).

### CONCLUSIONS

Of course, many modifications and extensions could be made to the instant invention by those of ordinary skill in the art. For example, although the instant disclosure has taught the application of movement/zoom effects to digital images, those of ordinary skill in the art will understand that there are many other sorts of effects that might be added including, without limitation, color balancing, digital filtering (noise removal /addition, edge enhancement, etc.), etc., and such could certainly be integrated into the GUI.

Finally, it should be noted that a key aspect of the instant invention is that is allows the creation of a video work from a collection of still images in a very efficient manner. This is accomplished by intelligent selection of default values, by use of a specially designed user interface that has been customized for each function or effect that is to be applied, etc. Further, all of the parameters associated with each effect are preferably presented together on the user's screen in the same single display so that the user does not need to navigate through a maze of menus in order to perform even complex editing of the input digital images.

## Claims

1. A method of creating a video work from a plurality of digital still images, wherein is provided a plurality of movement effects, each of said movement effects having at least one effect parameter associated therewith, wherein each of said at least one effect parameter has at least one parameter value associated therewith, comprising the steps of:
(a) opening a graphical user interface (200) on a computer display device;
(b) defining a section (201) within said graphical user interface (200);
(c) displaying within said section (201) a plurality of functions representative of at least a portion of said plurality of movement effects (206), each of said displayed functions representing a different one of said movement effects (206);
(d) displaying within said section (201) an effect parameter selection region of a plurality of effect parameters (211,212,450,503,505) related to a selection of at least one of said plurality of movement effects (206), wherein said available effect parameters have at least one parameter value associated therewith;
(e) selecting one of said plurality of digital still images (301);
(f) displaying at least a portion of said selected digital still image (210) within said section (201);
(g) defining a selection region (401) within said selected image;
(h) selecting one of said functions representative of at least a portion of said plurality of movement effects (206), said selected function being associated with a selected movement effect, thereupon populating said effect parameter selection region with the plurality of available effect parameters (211,212,450,503,505) related to the selection of one of said movement effects (206);
(i) displaying within said effect parameter selection region indicia representative of a value of at least one of said parameter values associated with said available effect parameter;
(j) specifying a movement duration parameter and a slide duration parameter;
(k) applying said selected movement effect to said selection region of said selected image for said specified movement duration parameter, thereby creating a rendered video clip having a length equal to said specified slide duration parameter and with a movement effect having a length equal to said movement duration parameter;
(m) performing steps (e) through (k) at least twice, thereby creating at least two rendered video clips;
(n) combining said rendered video clips, thereby creating said video work

2. A method of creating a video work from a plurality of digital still images according to Claim 1, comprising the further step of:
(o) writing said video work to computer readable media.

3. A method of creating a video work from a plurality of digital still images according to Claim 1, wherein said plurality of movement effects (206) comprises at least two of a pan movement effect, a zoom movement effect, and a rotation movement effect.

4. A method of creating a video work from a plurality of digital still images according to Claim 3, wherein said pan movement effect has associated effect parameters chosen from a list consisting of a pan direction (440), a pan speed (302).

5. A method of creating a video work from a plurality of digital still images according to Claim 1, wherein said plurality of movement effects (206) comprises at least two of a horizontal pan, a vertical pan, a zoom-in, a zoom-out, a clockwise rotation and a counter clockwise rotation.

6. A method of creating a video work from a plurality of digital still images according to Claim 5, wherein said clockwise rotation and counter clockwise rotation has associated effect parameters chosen from a list consisting of rotation start angle, rotation end angle (503).

7. A method of creating a video work from a plurality of digital still images according to Claim 1, wherein said selection region is a rectangle (401).

8. A method according to Claim 1, wherein all of said at least two rendered video clips are of a same time duration.

9. A method of creating a video work from a plurality of digital still images according to Claim 1, wherein step (e) comprises the step of automatically selecting one of said plurality of digital still images.

10. A method of creating a video work from a plurality of digital still images according to Claim 1, wherein the video clip in step (k) is rendered using default values.

11. A method of creating a video work from a plurality of digital still images according to Claim 10, wherein said user selection of a movement effect (206) is accomplished via a single user interaction, thereby causing a rendered video clip to be created with a single user interaction.

12. A method according to Claim 11, wherein said single user interaction is a single mouse click.

## Patentansprüche

1. Eine Methode zur Erstellung eines Video Werkes aus einer Vielzahl von digitalen Fotos, worin eine Vielzahl von Bewegungseffekten bereitgestellt wird, jeder dieser Bewegungseffekte mit mindestens einem Bewegungseffektparameter hinzugeordnet, wobei jeder dieser Bewegungseffektparameter einen Parameterwert hinzugordnet hat, diese Methode umfasst folgende Schritte:
a. öffnen einer grafischen Benutzeroberfläche (200) auf einem Computerdarstellungsgerät;
b. definieren einer Sektion (201) innerhalb der grafischen Benutzeroberfläche (200);
c. darstellen innerhalb der Sektion (201) einer Vielzahl von Funktionen repräsentativ für mindestens einen Teil der Vielzahl von Bewegungseffekten (206), jede der dargestellten Funktionen repräsentieren einen der Bewegungseffekten (206);
d. darstellen innerhalb der Sektion (201) eine Effekt Parameter Auswahl Region für eine Vielzahl von Effekt Parametern (211, 212, 450, 503, 505) bezogen auf die Auswahl von mindestens einem der Vielzahl von Bewegungseffekten (206), wobei diese Effektparameter mindestens einen Parameterwert zugeordnet haben;
e. auswählen eines der Vielzahl von digitalen Fotos (301);
f. darstellen von mindestens einem Teil des ausgewählten digitalen Fotos (210) innerhalb der Sektion (201);
g. definieren einer Selektionsregion (401) innerhalb des ausgewählten Fotos;
h. auswählen einer der Funktionen repräsentativ für mindestens einen Teil der Bewegungseffekte (206), diese ausgewählte Funktion ist verknüpft mit einem ausgewählten Bewegungseffekt, somit bestücken dieser Effektparameter Auswahlregion mit der Vielzahl von verfügbaren Effektparametern (211, 212, 450, 503, 505) welche sich auf die Auswahl von einem der Bewegungseffekten (206) bezieht;
i. darstellen innerhalb der Effektparameter Auswahlregion Markierungen repräsentativ für einen Wert von mindestens einem der Parameterwerte verknüpft mit dem verfügbaren Effektparameter;
j. spezifizieren eines Bewegungsdauerparameters und eines Slidedauerparameters;
k. anwenden des ausgewählten Bewegungseffekts auf die Auswahlregion des gewählten Bildes für den spezifizierten Bewegungsdauerparameters, somit Erstellen eines gerenderten Videoclips welcher eine Länge hat die gleich dem spezifizierten Slidedauerparameters ist und mit einem Bewegungseffekt besetzt ist, welcher eine Länge hat die gleich dem Bewegungsdauerparameters ist;
l. durchführen der Schritte (e) bis (k) mindestens zweimal, damit Erstellen von mindestens zwei gerenderten Videoclips;
m. verbinden der gerenderten Videoclips, somit Erstellen eines Video Werkes.

2. Eine Methode zur Erstellung eines Video Werkes aus einer Vielzahl von digitalen Fotos gemäß Anspruch 1, umfasst den folgenden weiteren Schritt: n. schreiben des Video Werkes auf ein Computer lesbares Medium.

3. Eine Methode zur Erstellung eines Video Werkes aus einer Vielzahl von digitalen Fotos gemäß Anspruch 1, wobei die Vielzahl von Bewegungseffekten (206) mindestens zwei von einem Schwenkbewegungseffekt, einem Zoombewegungseffekt und einem Rotationsbewegungseffekt umfasst.

4. Eine Methode zur Erstellung eines Video Werkes aus einer Vielzahl von digitalen Fotos gemäß Anspruch 3, wobei der Schwenkbewegungseffekt verknüpfte Effektparameter besitzt welche aus einer Liste mit Schwenkrichtung (440) und Schwenkgeschwindigkeit (302) bestehen.

5. Eine Methode zur Erstellung eines Video Werkes aus einer Vielzahl von digitalen Fotos gemäß Anspruch 1, wobei die Vielzahl von Bewegungseffekten (206) mindestens zwei der folgenden Effekte umfasst, horizontalen Schwenk, vertikalen Schwenk, heranzoomen, herauszoomen, Rotation im Uhrzeigersinn und eine Rotation entgegen dem Uhrzeigersinn.

6. Eine Methode zur Erstellung eines Video Werkes aus einer Vielzahl von digitalen Fotos gemäß Anspruch 5, wobei besagte Rotation im Uhrzeigersinn und Rotation entgegen dem Uhrzeigersinn verknüpfte Effektparameter besitzt, bestehend aus einer Liste von Rotationsbeginnwinkel und Rotationsendwinkel (503).

7. Eine Methode zur Erstellung eines Video Werkes aus einer Vielzahl von digitalen Fotos gemäß Anspruch 1, wobei die Auswahlregion einem Rechteck (401) entspricht.

8. Eine Methode gemäß Anspruch 1, wobei alle der mindestens zwei gerenderten Videoclips die gleiche Zeitdauer haben.

9. Eine Methode zur Erstellung eines Video Werkes aus einer Vielzahl von digitalen Fotos gemäß Anspruch 1, wobei Schritt e. den Schritt der automatischen Auswahl eines der Vielzahl von digitalen Fotos umfasst.

10. Eine Methode zur Erstellung eines Video Werkes aus einer Vielzahl von digitalen Fotos gemäß Anspruch 1, wobei der Videoclip in Schritt k. mittels Standardwerten gerendert wird.

11. Eine Methode zur Erstellung eines Video Werkes aus einer Vielzahl von digitalen Fotos gemäß Anspruch 10, wobei die Nutzerauswahl eines Bewegungseffektes (206) mit einer einzelnen Nutzerinteraktion umgesetzt wird, somit Erstellen eines gerenderten Videoclips mit einer einzelnen Nutzerinteraktion.

12. Eine Methode gemäß Anspruch 11, wobei die einzelne Nutzerinteraktion ein einzelner Mausclick ist.

## Revendications

1. Une méthode qui consiste à créer une œuvre vidéo à partir d'une pluralité d'images fixes numériques, une pluralité d'effets de mouvement étant fournie, au moins un paramètre d'effet étant associé à chacun d'eux, et au moins une valeur de paramètre étant associée à chacun desdits au moins un paramètre d'effet, et qui englobe les étapes suivantes :
(a) ouverture d'une interface utilisateur graphique (200) sur un dispositif d'affichage informatique
(b) définition d'une section (201) au sein de l'interface utilisateur graphique (200)
(c) affichage au sein de la section (201) d'une pluralité de fonctions représentatives d'au moins une partie de la pluralité d'effets de mouvement (206), chacune des fonctions affichées correspondant à un effet différent parmi les effets de mouvement (206)
(d) affichage au sein de la section (201) d'une zone de sélection d'une pluralité de paramètres d'effet (211, 212, 450, 503, 505) en lien avec une sélection d'au moins un des effets de mouvement (206), les paramètres d'effet disponibles étant associés à moins une valeur de paramètre
(e) sélection d'une des images fixes numériques (301)
(f) affichage d'au moins une partie de l'image fixe numérique sélectionnée (210) au sein de la section (201)
(g) définition d'une zone de sélection (401) au sein de l'image sélectionnée
(h) sélection d'une des fonctions représentatives d'au moins une partie de la pluralité d'effets de mouvement (206), la fonction de sélection étant associée à un effet de mouvement sélectionné, puis application de la pluralité de paramètres d'effet disponibles (211, 212, 450, 503, 505) à la zone de sélection du paramètre d'effet en lien avec la sélection de l'un des effets de mouvement (206)
(i) affichage au sein de la zone de sélection du paramètre d'effet d'indices représentatifs dont la valeur correspond à moins une des valeurs de paramètre associées au paramètre d'effet disponible
(j) spécification d'une durée de mouvement et d'une durée de transition
(k) application de l'effet de mouvement sélectionné à la zone de sélection de l'image sélectionnée pour la durée de mouvement spécifiée, puis rendu d'un clip vidéo dont la longueur est égale à la durée de transition spécifiée et qui comporte un effet de mouvement d'une longueur égale à la durée de mouvement spécifiée
(l) exécution des étapes (e) à (k) au moins deux fois, puis rendu d'au moins deux clips vidéo
(m)combinaison des clips vidéo ainsi générés, puis création de l'œuvre vidéo

2. Une méthode qui consiste à créer une œuvre vidéo à partir d'une pluralité d'images fixes numériques conformément à la revendication 1 et qui englobe l'étape suivante : (n) écriture de l'œuvre vidéo sur un support lisible par ordinateur

3. Une méthode qui consiste à créer une œuvre vidéo à partir d'une pluralité d'images fixes numériques conformément à la revendication 1, la pluralité d'effets de mouvement (206) englobant au moins deux effets parmi un effet de mouvement panoramique, un effet de mouvement de zoom et un effet de mouvement de rotation

4. Une méthode qui consiste à créer une œuvre vidéo à partir d'une pluralité d'images fixes numériques conformément à la revendication 3, des paramètres d'effet choisis parmi une liste comportant une direction panoramique (440) et une vitesse panoramique (302) étant associés à l'effet de mouvement panoramique

5. Une méthode qui consiste à créer une œuvre vidéo à partir d'une pluralité d'images fixes numériques conformément à la revendication 1, la pluralité d'effets de mouvement (206) englobant au moins deux effets parmi un panoramique horizontal, un panoramique vertical, un zoom avant, un zoom arrière, une rotation dans le sens des aiguilles d'une montre et une rotation dans le sens contraire des aiguilles d'une montre

6. Une méthode qui consiste à créer une œuvre vidéo à partir d'une pluralité d'images fixes numériques conformément à la revendication 5, des paramètres d'effet choisis parmi une liste comportant un angle de rotation de départ et un angle de rotation de fin (503) étant associés aux effets de rotation

7. Une méthode qui consiste à créer une œuvre vidéo à partir d'une pluralité d'images fixes numériques conformément à la revendication 1, la zone de sélection ayant la forme d'un rectangle (401)

8. Une méthode conforme à la revendication 1, la totalité desdits au moins deux clips vidéo générés étant de la même durée

9. Une méthode qui consiste à créer une œuvre vidéo à partir d'une pluralité d'images fixes numériques conformément à la revendication 1, l'étape (e) englobant la sélection automatique de l'une des images fixes numériques

10. Une méthode qui consiste à créer une œuvre vidéo à partir d'une pluralité d'images fixes numériques conformément à la revendication 1, le rendu du clip vidéo de l'étape (k) étant effectué avec des valeurs par défaut

11. Une méthode qui consiste à créer une œuvre vidéo à partir d'une pluralité d'images fixes numériques conformément à la revendication 10, la sélection de l'effet de mouvement (206) et le rendu du clip vidéo nécessitant respectivement une interaction unique

12. Une méthode conforme à la revendication 11, l'interaction unique consistant en un seul clic de souris.
